# EUROPEAN PATENT APPLICATION

(11) **EP 1 391 955 A2**
(43) Date of publication of application: **25.02.2004**
(21) Application number: 03255004.8
(22) Date of filing: 13.08.2003
(51) Int. Cl.: H01M 8/02, H01M 8/04

(54) **Fluid passages for power generation equipment**

(30) Priority: 21.08.2002 US 64829
(71) Applicant: GENERAL ELECTRIC COMPANY, Schenectady, NY 12345 (US)
(72) Inventor: Chellappa, Balan, Niskayuna, New York 12309 (US)
(74) Representative: Goode, Ian Roy

(57) **Abstract**

A cooling apparatus (100) for fuel cell components is provided wherein the cooling apparatus (100) comprises a base plate (110) having an upper section (120) and a lower section (130). A plurality of upper ribs (140) and a plurality of lower ribs (150) are coupled to the upper section (120) and the lower section (130), respectively. Each of the plurality of upper ribs (140) and lower ribs (150) define an upper serpentine channel (160) and a lower channel (170) wherein such channels are formed between each of the plurality of upper ribs (140) and lower ribs (150), respectively. In addition, the upper serpentine channel (160) and the lower channel (170) are fluidically coupled by at least one cavity (180) disposed in the base plate (110) wherein the upper serpentine channel (160) and the lower channel (170) are disposed to allow a flow of a fluid (190) therethrough so as to enhance the heat transfer between the fluid (190) and the fuel cell components.

## Description

The present invention relates generally to power generation equipment, and more particularly to improved fluid passages for solid oxide fuel cells.

A high temperature, solid oxide fuel cell stack is typically comprises planar cross flow fuel cells, counterflow fuel cells and parallel flow fuel cells that are constructed from flat single cell members and associated with fuel and air distribution equipment. Such members typically comprise trilayer anode/electrolyte/cathode components which conduct current from cell to cell and comprise at least one interconnect having channels for gas flow into a cubic structure or stack.

Solid oxide fuel cells generate electrical energy through electrochemical reactions between an oxidant and hydrocarbon fuel gas to produce a flow of electrons in an external circuit. In addition, solid oxide fuel cells generate waste heat that is typically removed via an oxidant in order to maintain a desired temperature level of solid oxide fuel cell components such as the anode, cathode and electrolyte.

While solid oxide fuel cells have demonstrated the potential for high efficiency and low pollution in power generation, some problems remain associated with temperature regulation of the components in solid oxide fuel cells. Solid oxide fuel cells typically comprise cooling channels in which the oxidant, typically air, is used to aid in the transfer or removal of the waste heat so as to maintain the stack temperature at or below prescribed limits and maintain a predetermined thermal gradient in the solid oxide fuel cell. In some designs, such cooling channels typically comprise smooth straight channels that have an undesired characteristic of providing low thermal transfer coefficients between the channel surface and the oxidant.

Accordingly, there is a need in the art for a solid oxide fuel cell having improved fluid passages that provide improved heat transfer characteristics.

One embodiment of the present invention comprises a cooling apparatus for fuel cell components comprising a base plate having an upper section and a lower section. A plurality of upper ribs and a plurality of lower ribs are coupled to the upper section and the lower section, respectively. Each of the plurality of upper ribs and lower ribs define an upper serpentine channel and a lower channel wherein such channels are formed between each of the plurality of upper ribs and lower ribs, respectively. In addition, the upper serpentine channel and the lower channel are fluidically coupled by at least one cavity disposed in the base plate wherein the upper serpentine channel and the lower channel are disposed to allow a flow of a fluid therethrough so as to enhance the heat transfer between the fluid and the fuel cell components.

These and other features, aspects, and advantages of the present invention will become better understood when the following detailed description is read with reference to the accompanying drawings in which like characters represent like parts throughout the drawings, wherein:
FIGURE 1 is a perspective view of a cooling apparatus for a fuel cell in accordance with one embodiment of the present invention;
FIGURE 2 is a top perspective view of Figure 1;
FIGURE 3 is a top perspective view of Figure 1; and
FIGURE 4 is a perspective view of a portion of a base plate and a plurality of ribs having a plurality of concavities disposed thereon in accordance with another embodiment of the present invention.

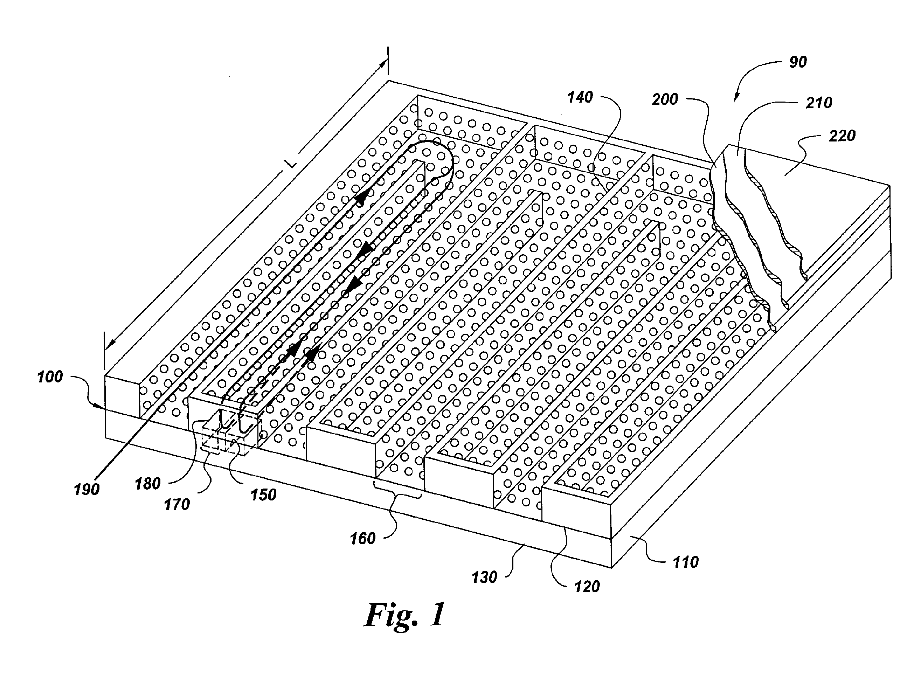

A cooling apparatus 100 is provided for a fuel cell in Figure 1. The cooling apparatus 100 comprises a (meaning at least one) base plate 110 having an upper section 120 and a lower section 130. A plurality of upper ribs 140 and a plurality of lower ribs 150 are coupled to the upper section 120 and the lower section 130, respectively. As used herein, the term "coupled" refers to a mechanical attachment of members of cooling apparatus 100 and includes, without limitation, welding, brazing, soldering and the like, as well as machining, metal-forming and casting the members as a single part. The upper ribs 140 and the lower ribs 150 define an upper serpentine channel 160 and a lower channel 170 formed between each of the plurality of upper ribs 140 and lower ribs 150, respectively. As used herein, the term "serpentine channel" includes, but is not limited to, a channel having a plurality of curves, bends or turns. The serpentine channel 160 may, without limitation, be constructed as a single monolithic channel or as two or more channel segments disposed adjacent to one another (not shown). The upper serpentine channel 160 and the lower channel 170 are fluidically coupled by a (meaning at least one) cavity 180 disposed in the base plate 110 (see Figure 1). As used herein, the term "fluidically coupled" refers to the cavity 180 being able to allow the transmission of a fluid 190 from the upper serpentine channel 160 to the lower channel 170. Furthermore, the upper serpentine channel 160 and the lower channel 170 are disposed to allow a flow of the fluid 190 therethrough so as to enhance the heat transfer rate between the fluid 190 and the fuel cell components, for example, an anode 220, cathode 200 and electrolyte 210 (see Figure 1). The fuel cell is typically selected from the group consisting of solid oxide fuel cells, proton exchange membrane or solid polymer fuel cells, molten carbonate fuel cells, phosphoric acid fuel cells, alkaline fuel cells, direct methanol fuel cells, regenerative fuel cells, and protonic ceramic fuel cells.

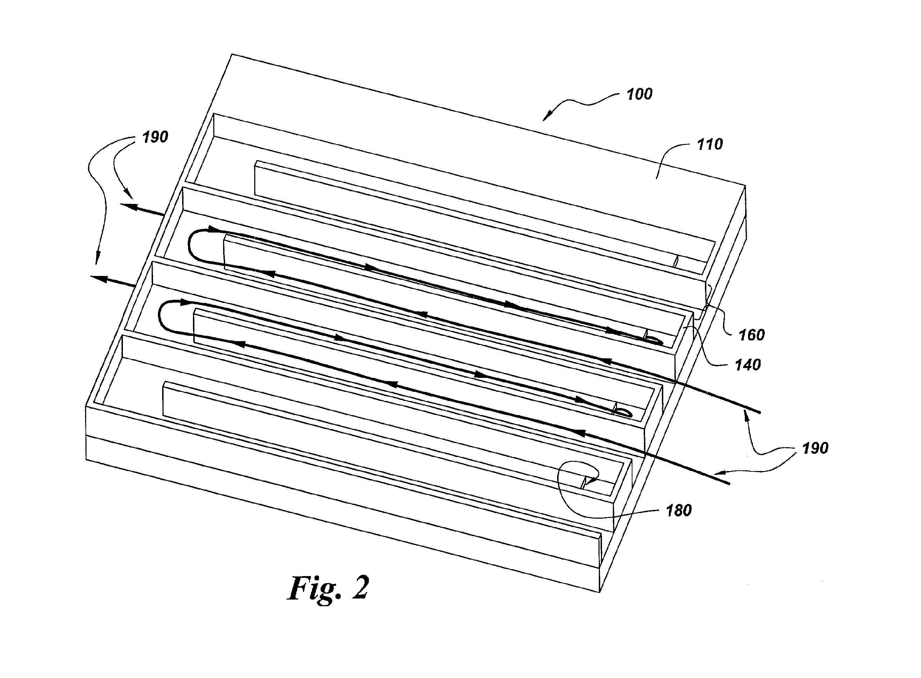

In solid oxide fuel cells, for example, an oxidant (e.g. oxygen molecules) passes through the cathode 200 and forms oxygen ions at a cathode electrolyte interface 240. For purposes of simplicity, the term "solid oxide fuel cell" will hereinafter be generically described as a "fuel cell". Subsequently, the oxygen ions migrate through the electrolyte 210 to combine with a fuel (typically a gaseous fuel) at an anode electrolyte interface 250 thereby releasing electrons at the anode 220. The electrons are collected at the cathode 200 through an external load circuit (not shown) thereby generating a flow of electrical current in the external load circuit from the anode 220 to the cathode 200. As a result of the interactions at the anode electrolyte interface 250, the fuel cell generates heat that must be removed in order to maintain a desired temperature level and a predetermined thermal gradient in the fuel cell. In one embodiment of the present invention, such removal of heat is typically accomplished by disposing upper ribs 140 of cooling apparatus 100 over the cathode 200 and introducing the fluid 190, typically an oxidant, into the upper serpentine channels 160 (as indicated by the solid arrows in drawing Figures 1 and 2) so that the oxidant fluid flow removes heat energy from the fuel cell as it travels therethrough. As used herein, the terms "over", "thereon", "therein", "above", "under", "into", "on" and the like are used to refer to relative location of elements of the cooling apparatus 100 as illustrated in the Figures and are not meant to be a limitation in any manner with respect to the orientation or operation of the cooling apparatus 100. In another embodiment of the present invention, the removal of heat is accomplished by disposing the upper ribs 140 of cooling apparatus 100 over the anode 180 (not shown) and introducing the fluid 210, typically a gaseous fuel, into the upper serpentine channels 160. It will be appreciated that the function of the cooling apparatus 100 and any embodiments mentioned herein are also applicable to such gaseous fuel.

In one embodiment of the present invention, the cooling apparatus 100 serves to electrically connect the anode of one repeatable fuel cell unit to the cathode of an adjacent cell unit (not shown). In addition, the cooling apparatus 100 serves to provide uniform current distribution (electrically conductive) and may be designed to be impermeable to gases, stable in both reducing and oxidizing environments and to support electron flow at a variety of temperatures. By way of example and not limitation, the cooling apparatus is constructed from a number of materials having the abovementioned properties typically comprising thin-formed metal, stainless steel, cobaltite, ceramic, LaCrO₃, CoCrO₄, Inconel 600, Inconel 601, Hastelloy X, Hastelloy 230 and combinations thereof.

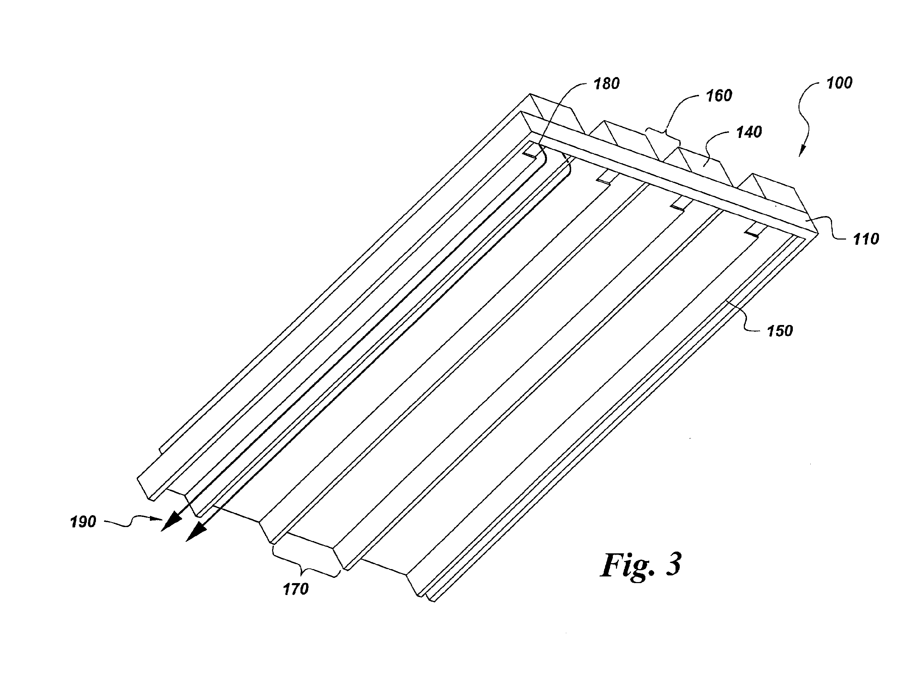

The cooling apparatus 100 comprises the upper serpentine channel 160 and the lower channel 170 being disposed to allow the flow of the fluid 190 therethrough so as to enhance the heat transfer rate between the fluid 190 and the fuel cell components, for example, an anode 220, cathode 200 and electrolyte 210. In one exemplary embodiment, the fluid 190 is typically introduced into the upper serpentine channel 160 (see Figure 2) wherein the fluid 190 changes direction at least once through such channel and is subsequently redirected to the lower channel 170 through the cavity 180 (see Figure 3).

By changing the direction and redirecting the fluid 190 through the cavity 180, the heat transfer rate between the cooling apparatus 100 and the fuel cell components is increased compared to conventional fuel cells. By way of example and not limitation, Figure 2 shows the fluid 190 introduced through the upper serpentine channel 160 until being redirected through the cavity 180 and into the lower channel 170 (see Figure 3). The position of the cavity 180 on the base plate 110 serves to locally enhance the heat transfer from all sides of the upper serpentine and lower channels 160,170 compared to conventional fuel cells having straight channels. Such localized heat transfer enhancement created is typically carried downstream by the fluid 190 when it is redirected to the lower channel 170. One aspect of the present invention is that by changing the direction and redirecting the flow of fluid 190 in the upper serpentine channel 160 and to the lower channel 170, respectively, the variance of the thermal gradient present in the fuel cell is reduced compared to conventional fuel cells. Such thermal gradients typically resulting from varying fuel utilization, variable fuel cell component material properties or variable anode or cathode porosities, for example. It will be appreciated that the number of upper serpentine and lower channels 160,170 and the number of cavities 180 are left to the artisan to determine based upon predetermined design requirements, for example, heat transfer rate and thermal gradient uniformity. In addition, the width and length of upper and lower ribs 140,150 as well as the shape and dimensions for the upper serpentine and lower channels 160,170 are left to the artisan depending upon a desired application (see Figures 1-3).

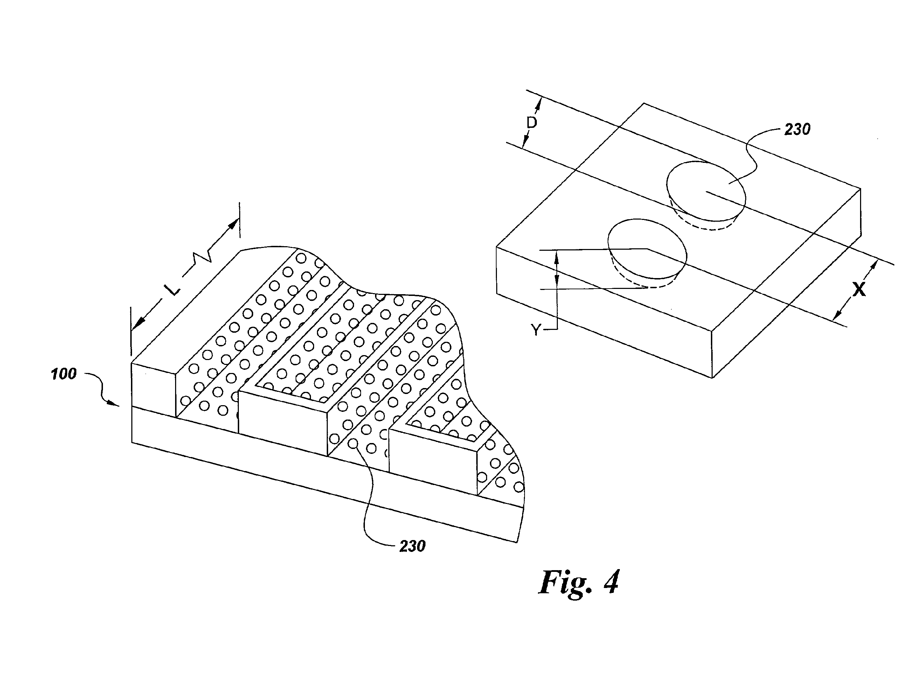

In one embodiment of the present invention, Figure 4 shows a plurality of concavities 230 disposed on a surface portion of the upper serpentine channel 160 and disposed on a surface portion of the base plate 110. As used herein, the term "concavity" refers to depressions, indentations, dimples, pits or the like. The shape of the concavities 230 is typically hemispherical or inverted and truncated conically shaped. In some embodiments, the shape of the concavities 230 is typically any sector of a full hemisphere. It will be appreciated that in other embodiments, the concavities 230 may be disposed on an entirety or a surface portion of the base plate 110, upper ribs 140, lower ribs 150, cathode 200, anode 220 or any combination thereof depending on a desired application.

The concavities 230 are typically formed on the abovementioned surfaces in a predetermined pattern that serves to enhance the heat transfer from the fuel cell components, typically the anode 220, cathode 200 and electrolyte 210, to the fluid 190, such as the oxidant. It will be appreciated that the position and orientation of the upper ribs 140 and the lower ribs 150 and the location of the concavities 230 on such ribs 140,150 can vary. As such, the position, orientation and location of the upper and lower ribs 140,150 and the concavities 230 disposed thereon (as shown in the Figures) are used by way of illustration and not limitation.

In operation, the fluid 190 is introduced into the upper serpentine channels 160 of cooling apparatus 100 and is disposed over the concavities 230 (see Figure 1). As a result, hydrodynamic interactions between the fluid 190 and the concavities 230 cause the heat transfer rate in the fuel cell to increase compared to conventional fuel cells. As used herein, the term "hydrodynamic interactions" refers to the interactions between the concavities 230 and the fluid 190 in which each concavity 230 creates a pressure field within the concavity 230 so as to create a vortex pattern (not shown) in a portion of the flow of the fluid 190. In addition, the heat transfer rate between the fluid 190 and each respective concavity 230 is typically increased (compared to designs having surfaces without concavities) due to an increase in the surface area caused by the shape of each respective concavity 230. As such, the fluid 190 interacts with such increased surface area thereby enhancing the removal of heat energy from the fuel cell. It will be appreciated that in some embodiments the increase in heat transfer rate is not directly proportional to the increase in the surface area and may often be greater depending upon a predetermined design.

The depth "Y" for a given one of the concavities 230 typically remains constant through the length "L" of the cooling apparatus 100 (see Figures 1 and 4). The depth "Y" is generally in the range between about 0.10 to about 0.50 times the concavity surface diameter "D". In addition, the depth "Y" of the concavities 260 is in the range between about 0.002 inches to about 0.25 inches. The center-to-center spacing "X" of the concavities 230 is generally in the range between about 1.1 to about 2 times the surface diameter "D" of the concavities 230. In one embodiment, the concavities 230 are typically formed by using a pulse electrochemical machining (PECM) process. In an alternative embodiment, the concavities 230 are typically formed by using an electro-discharge machining (EDM) process.

## Claims

1. A cooling apparatus (100) for fuel cell components comprising:
a base plate (110) having an upper section (120) and a lower section (130);
a plurality of upper ribs (140) and a plurality of lower ribs (150) coupled to said upper section (120) and said lower section (130), respectively, each of said plurality of upper ribs (140) and lower ribs (150) defining an upper serpentine channel (160) and a lower channel formed between each of said plurality of upper ribs (140) and lower ribs (150), respectively, said upper serpentine channel (160) and said lower channel (170) fluidically coupled by at least one cavity (180) disposed in said base plate (110),
wherein said upper serpentine channel (160) and said lower channel (170) are disposed to allow a flow of a fluid (190) therethrough so as to enhance the heat transfer between said fluid (190) and said fuel cell components.

2. The cooling apparatus (100) of claim 1, wherein said fuel cell components are selected from the group consisting of cathodes, anodes and electrolyte (200)s.

3. The cooling apparatus (100) of claim 1, wherein a plurality of concavities (230) are disposed on a surface portion of said upper serpentine channel (160) and disposed on a surface portion of said lower channel (170) so as to cause hydrodynamic interactions and affect the heat transfer rate between said fluid (190) and said concavities (230) when said fluid (190) is disposed over said concavities (230).

4. The cooling apparatus (100) of claim 3, wherein said concavities (230) are selected from the group consisting of depressions, indentations, dimples and pits.

5. The cooling apparatus (100) of claim 1, wherein said fluid (190) is selected from the group consisting of gaseous fuels and oxidants.

6. The cooling apparatus (100) of claim 1, wherein said cooling apparatus (100) comprises one of a thin-formed metal, stainless steel, cobaltite, ceramic, LaCrO₃, CoCrO₄, Inconel 600, Inconel 601, Hastelloy X, Hastelloy 230 and combinations thereof.

7. A fuel cell (90) assembly comprising:
at least one fuel cell having at least two electrodes and an electrolyte (210) disposed therebetween;
at least one cooling apparatus (100) coupled to at least one of said electrodes, said cooling apparatus (100) comprising:
a base plate (110) having an upper section (120) and a lower section (130);
a plurality of upper ribs (140) and a plurality of lower ribs (150) disposed over said upper section (120) and said lower section (130), respectively, each of said plurality of upper ribs (140) and lower ribs (150) defining an upper serpentine channel (160) and a lower channel (170) formed between each of said plurality of upper ribs (140) and lower ribs (150), respectively, said upper serpentine channel (160) and said lower channel (170) fluidically coupled by at least one cavity (180) disposed in said base plate (110),
wherein said upper serpentine channel (160) and said lower channel (170) are disposed to allow a flow of a fluid (190) therethrough so as to enhance the heat transfer between said fluid (190) and said fuel cell.

8. The fuel cell assembly (90) of claim 7, wherein said fuel cell is selected from the group consisting of solid oxide fuel cells, solid polymer fuel cells, molten carbonate fuel cells, phosphoric acid fuel cells, alkaline fuel cells, direct methanol fuel cells, regenerative fuel cells, and protonic ceramic fuel cells.

9. The fuel cell assembly (90) of claim 7, wherein said electrodes are selected from the group consisting of cathodes (200) and anodes (220).

10. The fuel cell assembly (90) of claim 7, wherein a plurality of concavities (230) are disposed on a surface portion of said upper serpentine channel (160) and disposed on a surface portion of said lower channel (170) so as to cause hydrodynamic interactions and affect the heat transfer rate between said fluid (190) and said concavities (230) when said fluid (190) is disposed over said concavities (230).
